(19) **Europäisches Patentamt** / **European Patent Office** / **Office européen des brevets**

(11) **EP 4 150 362 B1**

(12) **FASCICULE DE BREVET EUROPÉEN**

(45) Date de publication et mention de la délivrance du brevet:
**18.02.2026 Bulletin 2026/08**

(21) Numéro de dépôt: **21722253.8**

(22) Date de dépôt: **04.05.2021**

(51) Classification Internationale des Brevets (IPC):
**G01S 5/02** *(2010.01)*

(52) Classification Coopérative des Brevets (CPC):
**G01S 5/0278; G01S 5/02695**

(86) Numéro de dépôt international:
**PCT/EP2021/061661**

(87) Numéro de publication internationale:
**WO 2021/228617 (18.11.2021 Gazette 2021/46)**

(54) **MÉTHODE ET SYSTÈME DE GÉNÉRATION D'UNE CARTE DE PROBABILITÉ DE PRÉSENCE D'UN ÉMETTEUR**

VERFAHREN UND SYSTEM ZUR ERZEUGUNG EINER WAHRSCHEINLICHKEITSKARTE FÜR DIE PRÄSENZ EINES SENDERS

METHOD AND SYSTEM FOR GENERATING A PROBABILITY MAP FOR THE PRESENCE OF A TRANSMITTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2020 FR 2004735**

(43) Date de publication de la demande:
**22.03.2023 Bulletin 2023/12**

(73) Titulaire: **THALES**
**92190 Meudon (FR)**

(72) Inventeurs:
- **SEUTE, Hugo**
  **78852 ELANCOURT CEDEX (FR)**
- **LACROIX, Marguerite**
  **78852 ELANCOURT CEDEX (FR)**
- **BREUIL, Nicolas**
  **78852 ELANCOURT CEDEX (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2018/038904     WO-A1-2018/115943**

- **ULMKE MARTIN ET AL: "Gaussian Mixture Based Target Tracking Combining Bearing-Only Measurements and Contextual Information", 2018 21ST INTERNATIONAL CONFERENCE ON INFORMATION FUSION (FUSION), ISIF, 10 July 2018 (2018-07-10), pages 1 - 8, XP033398089, DOI: 10.23919/ICIF.2018.8455749**

**Description**

L'invention concerne le domaine des récepteurs d'ondes électromagnétiques et leur application pour la localisation passive de sources d'émission d'ondes électromagnétiques.

Les sources d'émission à localiser correspondant, par exemple, à des émetteurs radar ou des émetteurs de communications.

L'invention porte sur une méthode de génération d'une carte de probabilité de présence d'une source d'émission.

La présente invention concerne une méthode et un système permettant d'évaluer la présence d'émetteurs sur une zone géographique donnée. Par exemple, le système selon l'invention peut être embarqué dans un aéronef qui survole la zone. Un exemple d'application de l'invention consiste à définir une zone de risques pour, par exemple, accompagner une prise de décision du pilote de l'aéronef afin de définir une route optimale pour éviter la zone de risques.

Dans le cas où les émetteurs à localiser ont une position fixe, il est possible de les localiser, par exemple en utilisant des moyens de localisation par satellite ou autres moyens, une fois pour toute avant le départ de l'aéronef.

Lorsque les émetteurs sont mobiles, cela est plus difficile car leurs positions peuvent évoluer entre le moment de la localisation et la mission de l'aéronef.

Par ailleurs, les émetteurs à localiser peuvent être embarqués sur des porteurs de natures diverses et notamment qui peuvent avoir des envergures variables. Par exemple, les porteurs de grande envergure sont généralement faiblement mobiles tandis que les porteurs de moyenne envergure peuvent être plus mobiles.

Lors d'une mission de surveillance, la position des sources à localiser de moyenne envergure n'est pas connue avec certitude ce qui contribue à augmenter le niveau de risques de la mission ou à interdire de survol de larges zones considérées comme à haut niveau de risques car avec une forte probabilité de présence de ce type d'émetteurs.

Les zones de risques sont généralement définies par rapport aux portées des émetteurs.

Le problème général visé par l'invention consiste à améliorer la localisation d'émetteurs potentiellement mobiles et de natures diverses en prenant en compte différents types d'informations.

En particulier, un objectif général est de définir des zones de localisation pour les émetteurs ayant été préalablement détectés, déterminer les zones géographiques accessibles par les émetteurs et utiliser ces connaissances pour affiner les localisations des émetteurs interceptés, et donner un a priori sur la position d'émetteurs potentiels (probablement présents mais non détectés),

Ainsi, le problème technique visé par l'invention est celui de la localisation de ces systèmes d'émetteurs. L'invention permet d'apporter de l'information supplémentaire sur la localisation d'un émetteur par la prise en compte du contexte et de l'environnement dans lesquels se déroule la mission. Cet apport d'information permet d'établir une cartographie a priori des emplacements des sources d'émission encore non détectées, ou bien d'améliorer la précision de localisation des sources déjà détectées.

La localisation passive d'émetteurs est une problématique bien connue. Diverses techniques existent pour déterminer la position d'une source d'émission, par le biais de différents types de mesures. On peut citer sans être exhaustif des méthodes qui exploitent des différences de temps d'arrivée (TDOA), une différence de temps de passage de lobe, la goniométrie par différence de phase ou d'amplitude.

Cette fonctionnalité de localisation passive peut être mise en œuvre sur plusieurs systèmes opérationnels, aéroportés, navals ou spatiaux.

Ces solutions permettent d'obtenir une estimation de la localisation d'un émetteur. Les données obtenues en sortie d'un tel système sont généralement de deux types : les coordonnées géographiques du point estimé, et une matrice de covariance, décrivant l'incertitude sur la localisation estimée. Ces données de sortie peuvent être représentées sur une carte par une ellipse d'incertitude centrée autour de la position estimée de l'émetteur.

Ce type de méthode de localisation ne permet pas de prendre en compte l'environnement et le contexte dans lesquels se déroule la mission. Par exemple, lors de la détection d'un signal provenant d'un émetteur terrestre connu, les solutions précédentes ne permettent pas d'exclure les zones aquatiques (rivières, lacs ...) des emplacements possibles de localisation de l'émetteur.

De plus, la représentation de zone d'incertitude par une simple ellipse est limitative. En effet, les zones possibles de présence de la menace peuvent avoir une forme complexe. Ceci est d'autant plus vrai que l'incertitude sur la position est grande.

La solution proposée par l'invention consiste en un système de cartographie de la probabilité de présence des émetteurs prenant en compte de multiples informations géographiques et contextuelles sur la zone d'intérêt et sur les émetteurs à localiser afin de prédire ou d'affiner les emplacements probables de ces émetteurs.

Cette solution permet de traiter le problème de la localisation de systèmes complets composés de plusieurs émetteurs en réseau en prenant en compte les différents assemblages possibles d'unités les composant.

Par rapport aux solutions de l'état de l'art, l'invention permet de prendre en compte de façon unifiée de multiples informations liées au contexte de nature très diverses : routes, eau, relief, relation entre objets etc. Les sources d'information sont fusionnées pour donner en sortie une carte de densité de probabilité de présence pour chaque émetteur détecté ou potentiellement présent dans la zone. Le fait de prendre en compte le plus d'informations contextuelles possible permet de réduire la taille des zones possibles pour les emplacements des émetteurs.

La carte de localisation fournie par l'invention permet de focaliser l'attention d'un pilote ou de l'opérateur en priorité sur les zones de présence de menace les plus probables. Si l'opérateur décide de déclencher une recherche précise par un balayage optronique ou autre (prise d'images SAR par exemple), le fait de commencer le balayage par les zones de présence les plus probables permet de réduire le temps moyen de recherche.

De plus la solution proposée permet de réaliser un apprentissage de la bibliothèque de caractéristiques des émetteurs au fil des missions.

L'invention porte sur une méthode, mise en œuvre par ordinateur, selon la revendication indépendante 1.

Selon un aspect particulier de l'invention, le capteur de localisation est un radar ou un capteur optronique.

Selon un aspect particulier de l'invention, le capteur de localisation fournit une zone de localisation de l'émetteur définie par un centre et une matrice de covariance et la carte de localisation est déterminée par application d'une distribution binormale paramétrée par le centre de la zone de localisation et la matrice de covariance.

Selon un aspect particulier de l'invention, la carte de localisation d'un émetteur sachant la localisation d'au moins un autre émetteur est déterminée au moyen des étapes de :

- Générer une zone de présence d'un émetteur autour de chaque autre émetteur précédemment localisé,
- Affecter aux points de la zone une valeur dépendant d'un coefficient d'affinité entre l'émetteur à localiser et l'émetteur précédemment localisé.

Selon un aspect particulier de l'invention, la carte de localisation d'un émetteur en fonction du relief d'une zone est déterminée au moyen des étapes de :

- Générer une cartographie d'une zone,
- Appliquer à la cartographie un filtre de convolution pour amplifier les maxima locaux,
- Normaliser la cartographie filtrée.

Selon un aspect particulier de l'invention, la carte de localisation d'un émetteur en fonction d'une cartographie sémantique d'une zone est déterminée au moyen des étapes de :

- Générer une cartographie d'une zone,
- Appliquer à la cartographie une segmentation sémantique pour générer plusieurs masques de la zone, associés chacun à un type de terrain,
- Fusionner les masques et normaliser le résultat.

Selon un aspect particulier de l'invention, chaque masque est pondéré par un coefficient d'affinité entre le type de terrain et le type d'émetteur.

Selon une variante particulière, la méthode selon l'invention comprend en outre la génération d'une zone de localisation définie par un centre et une covariance déterminés à partir de la carte de probabilité de présence obtenue après fusion.

Selon un aspect particulier de l'invention, au moins un paramètre parmi : les paramètres du filtre de convolution, les coefficients d'affinité entre un type de terrain et un type d'émetteur, les dimensions des zones de présence, les coefficients d'affinité entre un émetteur à localiser et un émetteur précédemment localisé, est déterminé au moyen d'une méthode d'apprentissage automatisée.

Selon la revendication indépendante 11, l'invention a aussi pour objet un système de génération d'une carte de probabilité de présence d'un émetteur comprenant des moyens configurés pour mettre en œuvre la méthode selon l'invention.

D'autres caractéristiques et avantages de la présente invention apparaîtront mieux à la lecture de la description qui suit en relation aux dessins annexés suivants.

[Fig. 1] la figure 1 représente un schéma de principe des différentes sources d'information prises en compte par l'invention,

[Fig. 2] la figure 2 représente un organigramme détaillant les étapes de mise en œuvre d'un exemple de réalisation de l'invention,

[Fig. 3] la figure 3 représente une carte de densité de probabilité de présence obtenue à partir d'un capteur de localisation,

[Fig. 4] la figure 4 représente le résultat de l'application d'un filtre de convolution pour amplifier les maxima locaux d'une carte en relief,

[Fig. 5] la figure 5 représente un exemple de masque délimitant un type de zones de terrain,

[Fig. 6] la figure 6 représente un exemple de carte de densité de probabilité de présence liée au type de terrain,

[Fig. 7] la figure 7 représente un exemple de carte de densité de probabilité

[Fig. 8] la figure 8 représente un premier schéma,

[Fig. 9] la figure 9 représente une carte de densité de probabilité de présence obtenue à partir d'un capteur de localisation,

[Fig. 10] la figure 10 représente une carte de densité de probabilité de présence obtenue à partir d'une segmentation du terrain,

[Fig. 11] la figure 11 représente un exemple de carte de densité de probabilité de présence finale,

[Fig. 12] la figure 12 représente un second schéma,

[Fig. 13] la figure 13 représente une carte de densité de probabilité prenant en compte une contrainte de proximité entre deux émetteurs,

[Fig. 14] la figure 14 représente une carte de densité de probabilité prenant en compte une contrainte d'affinité à différents types de terrains,

[Fig. 15] la figure 15 représente une carte de densité de probabilité prenant en compte une contrainte de relief,

[Fig. 16] la figure 16 représente un exemple de carte de densité de probabilité de présence finale,

[Fig. 17] la figure 17 représente un exemple de système configuré pour exécuter la méthode selon l'invention.

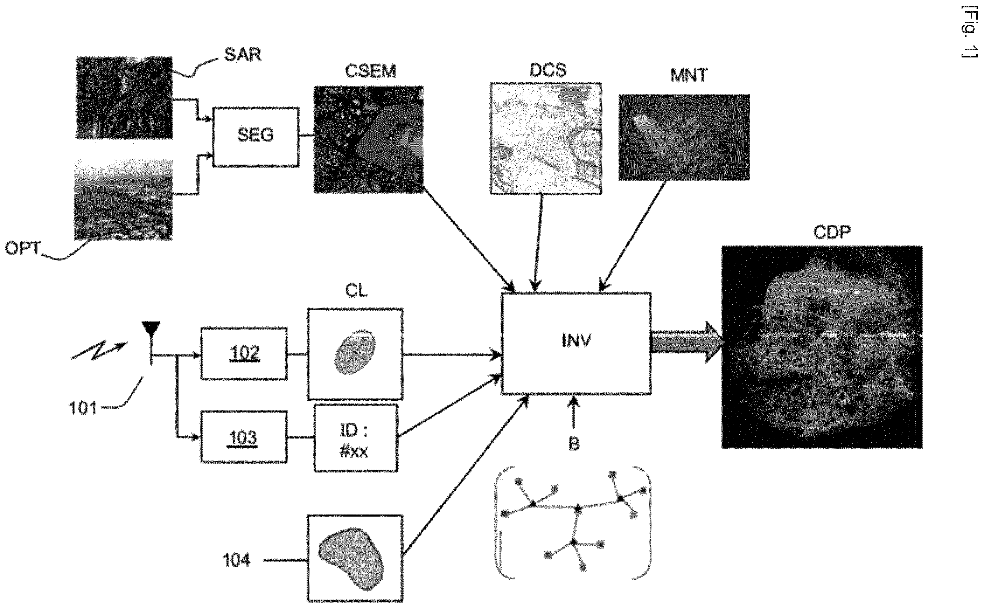

La figure 1 représente un schéma de principe de l'invention qui propose une méthode de génération d'une carte de densité de probabilité de présence d'une source émettrice. La méthode exploite de multiples sources d'information différentes sui sont représentées à la figure 1.

L'invention utilise notamment un récepteur 101 d'ondes électromagnétiques capable de détecter des sources d'émission ainsi que de les localiser et les identifier. Le récepteur 101 implémente ainsi une fonctionnalité de localisation 102 qui produit une carte de localisation CL et une fonctionnalité d'identification 103 qui produit un identifiant ID de la source localisée.

L'invention peut aussi utiliser des sources d'information extérieures 104 qui donnent des indications a priori sur la localisation des sources d'émission.

L'invention peut encore utiliser un ou plusieurs capteurs d'imagerie, par exemple un capteur d'imagerie radar SAR ou un capteur d'imagerie optique visible ou optique infrarouge OPT. Chaque capteur d'imagerie est associé à un algorithme de segmentation SEG pour produire une carte de segmentation sémantique d'une zone de terrain CSEM.

L'invention peut encore utiliser des données de cartographie sémantiques pré-calculées et embarquées DCS et un modèle numérique de terrain MNT.

L'invention peut encore utiliser une base de données B contenant des informations décrivant des caractéristiques de positionnement de différences sources à localiser les unes par rapport aux autres, par exemple lorsque les sources à localiser sont organisées en réseaux de sources.

L'invention exploite les différentes sources d'information décrites ci-dessus pour implémenter un algorithme de cartographie INV permettant de localiser de façon plus précise différentes sources d'émission en produisant une carte de densité de probabilité de présence multicritères CDP.

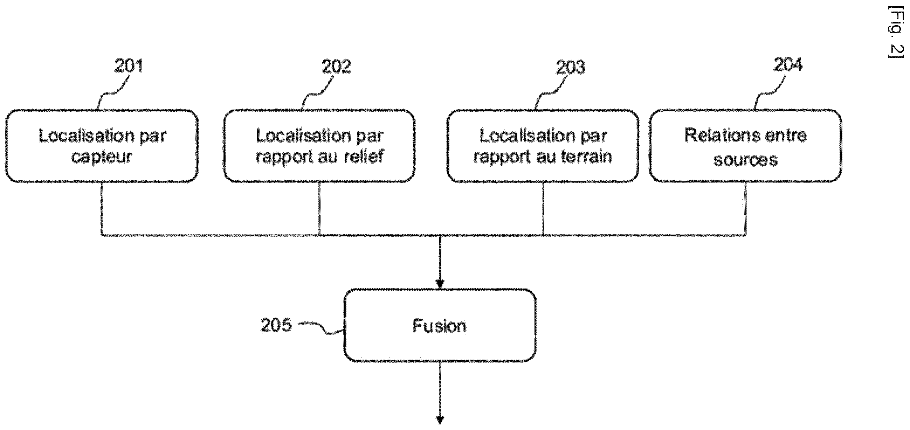

La figure 2 schématise, sur un organigramme, les étapes de mise en œuvre du procédé selon l'invention.

Le procédé comprend différentes étapes de localisation 201,202,203,204 qui utilisent les différentes sources d'information décrites précédemment puis une étape de fusion 205 des différentes cartes de localisation obtenues pour générer une carte de densité de probabilité de présence de sources émettrices.

Dans une première étape 201, on génère une carte de localisation à partir d'informations fournies par un capteur de localisation.

Une estimation de la localisation d'un émetteur peut être obtenue de façon plus ou moins précise par une méthode de localisation passive classique tel que décrit dans la référence [Wil85]. Cette estimation est traditionnellement représentée sous la forme d'une ellipse, dont les axes sont définis par la matrice de covariance, et le centre par les coordonnées géographiques de l'estimée.

En faisant l'hypothèse d'une distribution bi-normale, on peut représenter en deux dimensions une carte de densité de probabilité de présence de l'émetteur via la relation suivante :

$$f_{\mu,\Sigma}(x) = \frac{1}{2\pi|\Sigma|^{1/2}} \exp\left[-\frac{1}{2}(x-\mu)^T \Sigma^{-1}(x-\mu)\right]$$

Avec $x = [x_1, x_2]^T$ les coordonnées du point de la carte où l'on veut évaluer la densité de probabilité de présence, $\mu$ et $\Sigma$ respectivement les coordonnées de la position estimée et sa matrice de covariance associée, fournis par une méthode de localisation passive.

En réalisant l'intégration de $f_{\mu,\Sigma}(x)$ sur des tuiles de petites dimensions (pixels), on peut obtenir une carte de densité de probabilité de présence sous forme d'une image (matrice de pixels) à la résolution souhaitée.

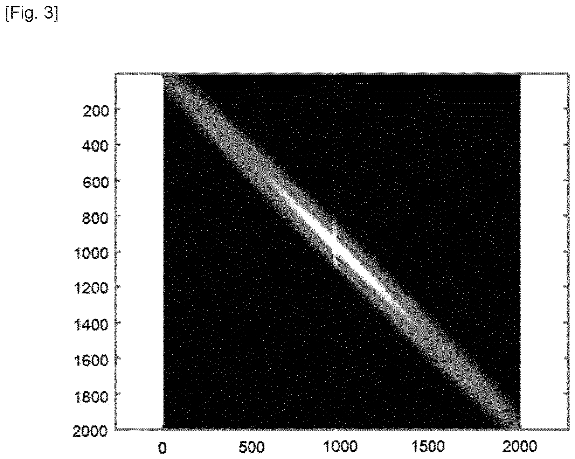

La figure 3 donne un exemple de représentation d'une estimation de localisation obtenue à l'issue de l'étape 201 sous forme de carte de densité de probabilité. On note cette première carte Lp. La carte concerne la localisation d'un seul émetteur.

La valeur d'un pixel représente la probabilité que l'émetteur soit présent dans la tuile correspondante au pixel.

Il convient de noter que cette approche est valable si une estimation de localisation est obtenue par un autre moyen que la localisation passive. Par exemple une carte de densité de probabilité de présence peut être construite de façon similaire à partir d'une piste radar GMTI.

Dans une deuxième étape 202, on détermine une deuxième carte de densité de probabilité de présence en prenant en compte le relief de la zone surveillée.

On fait l'hypothèse que les émetteurs à localiser sont plus vraisemblablement situés sur des emplacements qui maximisent leur couverture. Cette couverture est fortement affectée par le relief : les émetteurs situés dans des cuvettes ou dans une vallée auront une zone aveugle due au masquage par le relief. A l'inverse, un émetteur situé sur une crête ou un sommet aura un domaine de couverture large.

On ne s'intéresse donc pas à l'altitude absolue, ni à la pente du terrain mais aux points culminants. Les points culminants d'un terrain correspondent aux zones où l'opérateur Laplacien (correspondant à une dérivée seconde) du modèle numérique de terrain prend des valeurs positives élevées.

En pratique, le calcul de l'opérateur Laplacien est sensible au bruit. Pour obtenir des valeurs plus lisses on applique un filtrage, par exemple Gaussien (convolution avec un noyau Gaussien). Les deux opérations (filtrage et calcul du Laplacien) peuvent être effectuées en une seule fois par un filtrage avec un noyau de convolution LoG (Laplace of Gaussian).

Ce noyau se calcule par la formule suivante :

$$LoG(x,y) = -\frac{1}{\pi\sigma^4}\left[1 - \frac{x^2+y^2}{2\sigma^2}\right]e^{-\frac{x^2+y^2}{2\sigma^2}}$$

Avec $\sigma$ correspondant à l'écart-type du noyau de filtrage gaussien, en nombre de pixels. Une valeur élevée de $\sigma$ fait ressortir les points culminants d'étendue importante (à grande échelle). A l'inverse, une valeur faible de $\sigma$ fait plutôt ressortir les points culminants locaux.

En fonction de l'application considérée, la valeur de $\sigma$ est réglée en fonction de la portée de l'émetteur. Un émetteur de courte portée n'a pas besoin d'être sur le sommet le plus haut de la région. Ce coefficient étant donc spécifique à un émetteur r, on le notera $\sigma_r$.

On note C la carte obtenue après filtrage. Cette carte est ensuite transformée en une densité de probabilité de présence Cp. Pour cela, on normalise la carte de manière à ce que la somme des valeurs de tous les pixels soit égale à 1 :

$$Cp_{i,j} = \frac{c_{i,j}}{\sum_a \sum_b C_{a,b}}$$

Sans sortir du cadre de l'invention, d'autres filtres peuvent être envisagés dans la mesure où il s'agit d'un filtre de convolution pour amplifier les maxima locaux.

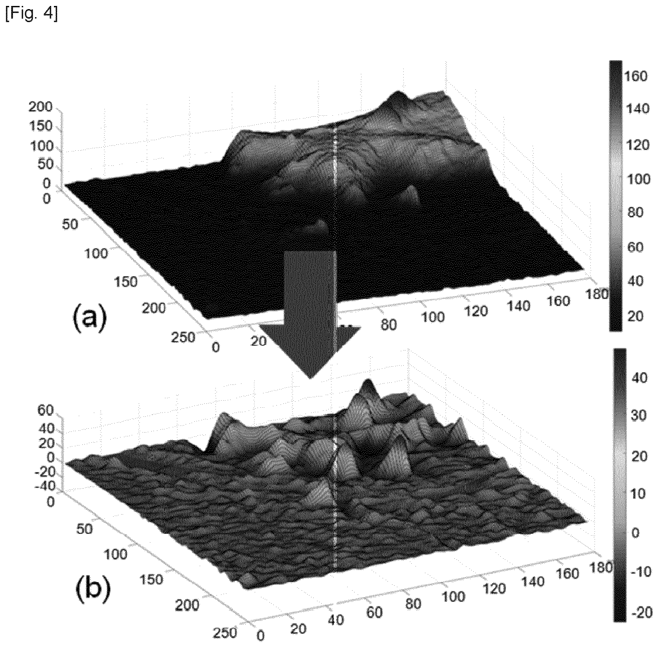

La figure 4 représente sur le haut de la figure (a) un modèle numérique de terrain intégrant le relief et sur le bas de la figure (b) le résultat de l'application d'un filtre de convolution pour amplifier les maxima locaux.

Dans une troisième étape 203, on détermine une troisième carte de densité de probabilité de présence basée sur une segmentation sémantique de la zone à surveiller.

Dans cette troisième étape 203, le type de terrain est pris en compte, par exemple si s'agit de routes, d'eau ou encore de zone urbaine, pour introduire un a priori sur la position des émetteurs à localiser. En effet, certains types d'émetteurs peuvent avoir une affinité plus ou moins forte pour un type de zone : par exemple les systèmes mobiles montés sur roues seront vraisemblablement proches d'une zone accessible par la route. De façon similaire, les systèmes terrestres ne se situeront pas sur l'eau.

Parmi les types de terrains pouvant être intéressant dans le cas de localisation de sources on peut citer :

- Eau (mer, rivières, lacs ...)
- Asphalte (routes, tarmac ...)
- Chemins
- Zone urbaine (zone avec une forte densité de bâtiments)
- Forêt
- Plaines (champs, herbe ou autre terrain dégagé)

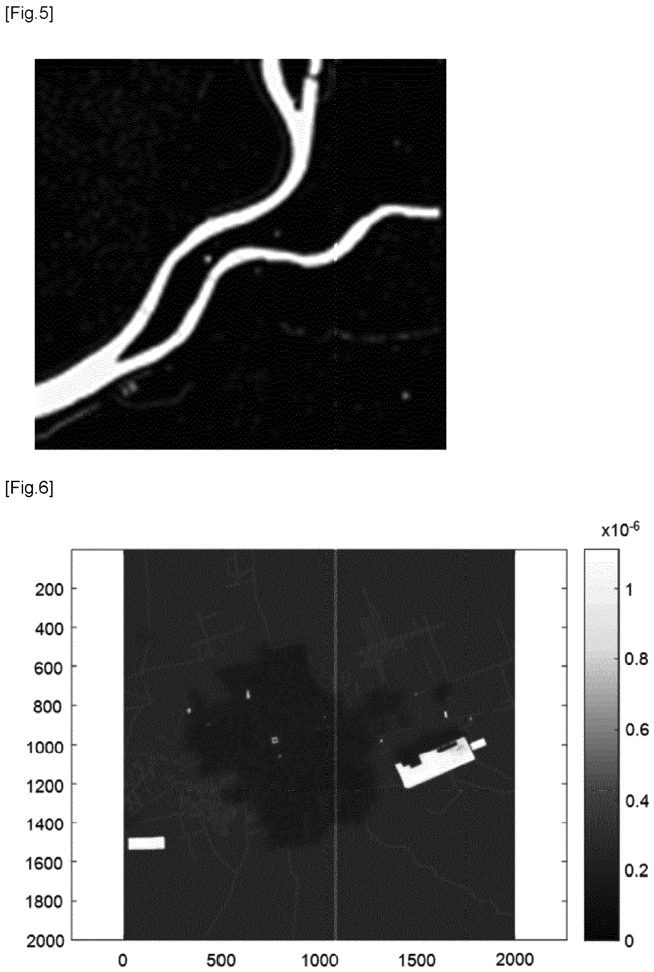

Ces types de terrains peuvent être représentés comme une collection de masques $M^k$. Ces masques sont des cartes où les pixels ont la valeur 1 sur les zones où le type de terrain est présent, et 0 en dehors. La figure 5 représente un exemple de masque pour le terrain de type « Eau ».

Ces masques peuvent être obtenus de plusieurs façons : grâce à des données de cartographies a priori ou grâce à des capteurs d'imagerie associés à un algorithme de segmentation sémantique capable d'identifier les types de terrains. Parmi les capteurs potentiellement utilisables, on peut citer les capteurs d'imagerie optique (visible ou infrarouge) et d'imagerie SAR.

De façon similaire à l'étape 202, on peut appliquer un filtrage Gaussien avec un écart-type $\sigma$ sur les masques afin de filtrer le bruit éventuellement présent sur les masques, ou pour rendre plus « floue » la frontière délimitée par un masque.

Lorsque l'émetteur est détecté et identifié, il est possible d'exploiter des connaissances a priori du type d'émetteur pour établir des coefficients d'affinité (ou de répulsion) entre certains types d'émetteurs et certains types de terrain. Par exemple, un émetteur mobile monté sur mât de faible hauteur n'aura pas d'affinité avec les terrains « zone urbaine » et « forêt ». Ces coefficients d'affinité permettent de pondérer l'influence de chaque type de terrain sur la localisation a posteriori de l'émetteur.

La carte obtenue après pondération par le coefficient d'affinité est obtenue pour le terrain de type $k$ en considérant un émetteur de type r par la relation suivante: $T_{i,j}^k = \alpha_{k,r}\, M_{i,j}^k + \left(1 - \alpha_{k,r}\right)\left(1 - M_{i,j}^k\right)$ Avec i, j les indices des pixels, $M^k$ le masque décrivant le terrain de type k, et enfin $\alpha_{k,r}$ le coefficient décrivant l'affinité de l'émetteur de type r au terrain de type k.

Ce coefficient $\alpha_{k,r}$ est un nombre réel compris entre 0 et 1.

Une valeur de coefficient d'affinité supérieure à 1/2 indique une affinité entre l'émetteur et le terrain ;

Une valeur de coefficient d'affinité inférieure à 1/2 indique une répulsion entre l'émetteur et le terrain (il est plus probable que l'émetteur soit en dehors du type de terrain), on remarque que le terme ($1 - M_{i,j}^k$) devient alors prépondérant.

Une valeur de coefficient d'affinité égale à 1/2 indique une indifférence vis-à-vis du terrain (dans ce cas $T_{i,j}^k = 1/2$ pour chaque pixel de la carte).

La prise en compte de ces multiples critères est obtenue en multipliant élément par élément les masques $M^k$ entre eux.

De façon similaire à l'étape 202, on normalise la carte obtenue afin d'obtenir une troisième carte de densité de probabilité de présence suivante : $Tp_{i,j} = \dfrac{\prod_k T_{i,j}^k}{\sum_a \sum_b \prod_k T_{a,b}^k}$ pour un type d'émetteur.

La figure 6 illustre un exemple de carte de densité multi-critères obtenue à l'étape 203 prenant en compte des terrains de type zone urbaine, route, tarmac avec des coefficients d'affinité différents.

Dans une quatrième étape 204, on détermine une quatrième carte de densité de probabilité de présence d'un émetteur sachant la localisation d'au moins un autre émetteur, obtenue à partir d'informations a priori de proximité entre émetteurs.

Dans cette quatrième étape 204, on prend en compte le fait que les émetteurs à localiser sont généralement groupés en réseaux, qui ont tendance à être regroupés géographiquement. Par exemple, lorsqu'on a détecté et localisé un premier émetteur, la probabilité de trouver un autre émetteur du même réseau est plus élevée à proximité du premier émetteur détecté.

Par exemple, une information d'entrée de l'étape 204 est la distance maximale $D_{q,r}$ entre l'émetteur $q$ localisé précédemment et un autre émetteur r du même réseau, on peut calculer un masque représentant la zone dans laquelle l'émetteur r doit vraisemblablement se trouver. Ainsi, on limite la zone de recherche.

Ce masque consiste, par exemple, en un disque, centré sur la position de l'émetteur q et de rayon $D_{q,r}$. Sur ce disque, les pixels du masque prennent la valeur 1, et en dehors 0. En variante, le masque peut aussi être constitué d'une information plus souple constituant une probabilité de proximité entre un émetteur q et un émetteur r.

Dans le cas de plusieurs émetteurs déjà localisés sur le terrain, il est possible de combiner les masques en prenant en compte des coefficients d'affinité $\beta_{q,r}$ entre un nouvel émetteur r à localiser et les émetteurs déjà localisés, de façon identique à la méthode présentée à l'étape 203. Autrement dit, un coefficient d'affinité $\beta_{q,r}$ traduit la probabilité qu'un nouvel émetteur à détecter soit lié, au sein du même réseau, à un émetteur précédemment détecté avec une certaine probabilité.

On obtient en sortie une quatrième carte de densité de probabilité que l'on appelle Rp.

Ensuite, dans une étape finale 205, on applique une fusion des différentes cartes de densité de probabilité Lp, *Cp, Tp, Rp* calculées aux étapes 201,202,203,204.

La densité de probabilité de présence a posteriori (appelée *Lp'*) est donnée par le théorème de Bayes :

$$Lp'_{i,j} = P(X = i, Y = j \mid L \cap C \cap T \cap R) = \frac{P(L \cap C \cap T \cap R \mid X=i,Y=j)\,P(X=i,Y=j)}{P(L \cap C \cap T \cap R)}$$

Avec :

$$P(L \cap C \cap T \cap R \mid X = i, Y = j) = Lp_{i,j} \times Cp_{i,j} \times Tp_{i,j} \times Rp_{i,j}$$

$$P(X = i, Y = j) = 1/N$$

$$P(L \cap C \cap T \cap R) = \frac{1}{N} \sum_a \sum_b Lp_{a,b} \times Cp_{a,b} \times Tp_{a,b} \times Rp_{a,b}$$

Soit :

$$Lp'_{i,j} = P(X = i, Y = j \mid L \cap C \cap T \cap R) = \frac{Lp_{i,j} \times Cp_{i,j} \times Tp_{i,j} \times Rp_{i,j}}{\sum_a \sum_b Lp_{a,b} \times Cp_{a,b} \times Tp_{a,b} \times Rp_{a,b}}$$

Où X et Y sont des variables aléatoires représentant la position de l'émetteur à localiser, et N est le nombre de pixels de la carte.

Par ce calcul on obtient la carte de densité de probabilité de présence finale Lp' à l'issue de l'étape 205.

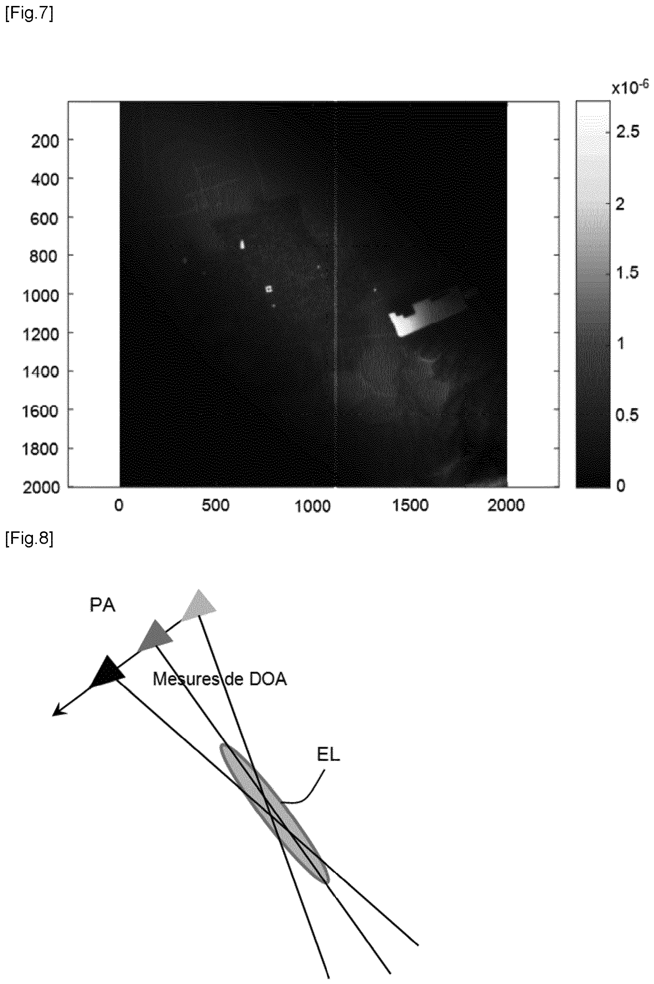

Un exemple de carte de densité de probabilité de présence d'un émetteur obtenue par l'invention est illustré à la figure 7.

Dans une variante de réalisation, la carte *Lp'* est retraduite sous la forme d'une ellipse d'incertitude mise à jour. Cette nouvelle ellipse est définie par son centre $\mu'$ et sa covariance $\Sigma'$, telles que :

$$\mu' = \begin{bmatrix} \mu_x' & \mu_y' \end{bmatrix}^{\mathrm{T}}$$

$$\Sigma' = \begin{bmatrix} \sigma_{xx}^{2}{}' & \sigma_{xy}' \\ \sigma_{xy}' & \sigma_{yy}^{2}{}' \end{bmatrix}$$

Pour obtenir ces paramètres on calcule les éléments suivants :

$$\mu'_x = \mathrm{E}[X] = \sum_i \left[ i \times \sum_j Lp'_{i,j} \right]$$

$$\mu'_y = \mathrm{E}[Y] = \sum_j \left[ j \times \sum_i Lp'_{i,j} \right]$$

$$\sigma^2_{xx}{}' = \mathrm{var}(X) = \sum_i \sum_j Lp'_{i,j} \, (i - \mu'_x)^2$$

$$\sigma^2_{yy}{}' = \mathrm{var}(Y) = \sum_i \sum_j Lp'_{i,j} \left(j - \mu'_y\right)^2$$

$$\sigma'_{xy} = \mathrm{cov}(\mathrm{X,Y}) = \sum_i \sum_j Lp'_{i,j} \, (i - \mu'_x)\left(j - \mu'_y\right)$$

Dans une variante de réalisation de l'invention, les différents coefficients utilisés pour générer les différentes cartes de densité de probabilité de présence d'un émetteur peuvent être déterminés par apprentissage automatique, par exemple au moyen d'un réseau de neurones entrainé ou toute méthode d'apprentissage équivalente.
Les coefficients concernés sont notamment :

- le coefficient $\sigma_r$, déterminant l'échelle pour laquelle sont calculés les points culminants,
- les coefficients d'affinité $\alpha_{k,r}$ déterminant l'affinité (ou la répulsion) entre un terrain de type $k$ et un émetteur du type r,
- les coefficients d'affinité $\beta_{q,r}$ déterminant l'affinité entre un émetteur de type r et un émetteur du type $q$ dans un système en réseau,
- les distances $D_{q,r}$ déterminant les distances maximales à laquelle l'émetteur r doit se trouver de l'émetteur q

Dans un premier temps ces coefficients sont déterminés grâce à des informations a priori. Ensuite, grâce à des retours d'expérience de missions, s'il est possible d'avoir un grand nombre d'observations effectives de la position d'émetteurs ainsi que du contexte, il devient envisageable de déterminer (ou ajuster) ces coefficients automatiquement par une méthode d'apprentissage.
Bien que la méthode selon l'invention ai été décrite pour une fusion des quatre exemples de cartes de densité de probabilité de présence, l'invention s'applique aussi à une fusion d'au moins seulement la première et quatrième desdites cartes.
Dans une variante de réalisation, plusieurs cartes de localisation peuvent être générées à l'étape 201 en exploitant différents capteurs de localisation.
D'autres informations a priori peuvent être prises en compte comme des frontières géographiques.
On décrit à présent deux exemples d'application ne faisant pas partie de l'invention.

Premier exemple d'application

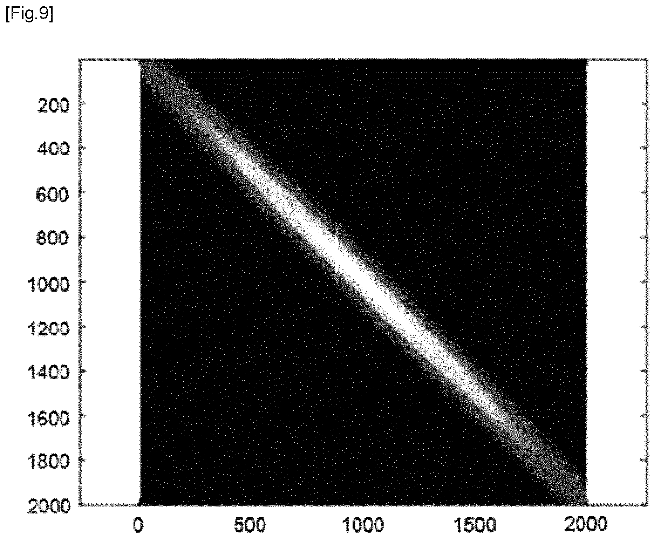

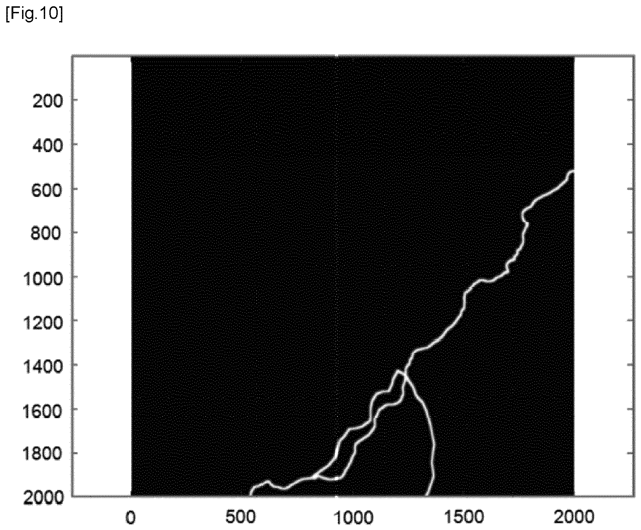

Dans ce premier exemple illustré à la figure 8, la méthode est mise en œuvre à bord d'une plateforme aéroportée PA.
Au cours de sa mission, cette plateforme détecte une source d'émission. Après quelques mesures passives de direction d'arrivée, une première estimation de la localisation de l'émetteur est obtenue, fournissant au système l'estimation de la position $\mu$ et la covariance $\Sigma$ associée.
L'ellipse de localisation EL qui en résulte est très allongée dans une direction, car il y a eu peu de défilement du porteur par rapport à la cible.
L'information liée à la localisation est représentée sous la forme de la carte $Lp$ obtenue à l'étape 201 du procédé et représentée sur la figure 9.
Cette première carte permet de délimiter la zone de recherche.
En parallèle, l'étape d'identification a pu permettre de déterminer le type de l'émetteur. La source est identifiée comme étant un émetteur mobile monté sur roues, avec un coefficient d'affinité $\alpha_{route}$ = 1. Une base de données cartographique embarquée a permis d'obtenir un masque $M^{route}$ représentant le réseau routier sur la zone d'intérêt. Dans cet exemple, pour des raisons de simplicité, on ne prendra pas en compte les autres types de terrains ni le relief.
L'information liée à la connaissance du type de terrain telle qu'obtenue à l'étape 203 est représentée sous la forme de la carte Tp représentée à la figure 10.

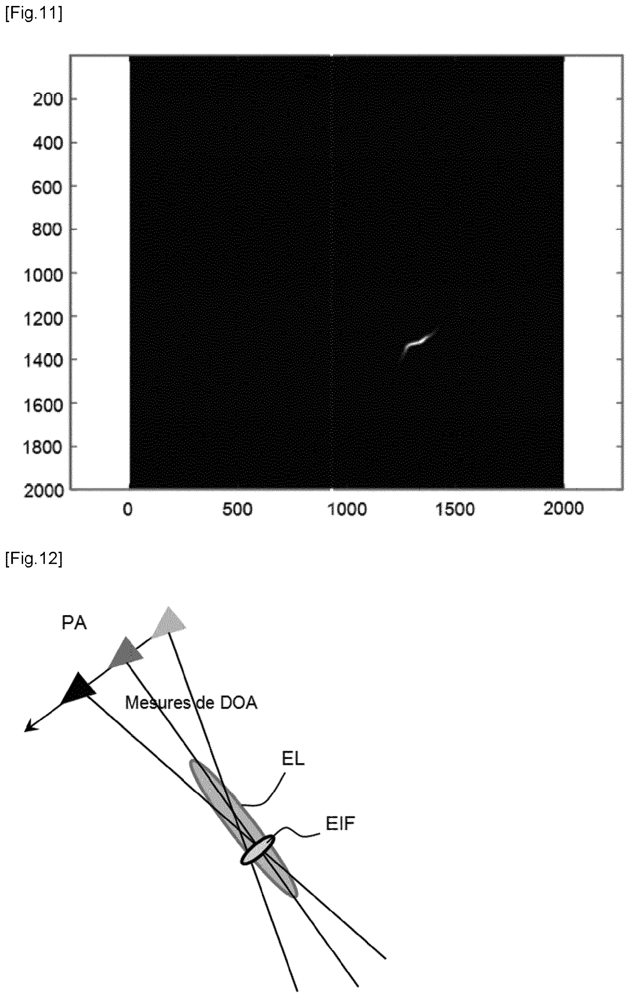

La figure 11 représente la carte de localisation obtenue à l'étape 205 par fusion des cartes des figures 9 et 10.

A partir de cette carte, il est possible de recalculer une ellipse d'incertitude finale EIF qui est représentée à la figure 12. Ainsi, la méthode permet, sur cet exemple, d'affiner la localisation de l'émetteur.

Second exemple d'application

Dans ce second exemple, la méthode est mise en œuvre au sol, en phase de préparation de mission. Des phases préalables ont permis de localiser et identifier un émetteur de type $q$ présent dans une zone donnée. On sait que cet émetteur $q$ est potentiellement associé à d'autres émetteurs de type r de courte portée pouvant s'allumer au dernier moment. On cherche à déterminer les emplacements les plus probables de ces nouveaux émetteurs, qui n'ont pas été détectés lors des missions précédentes.

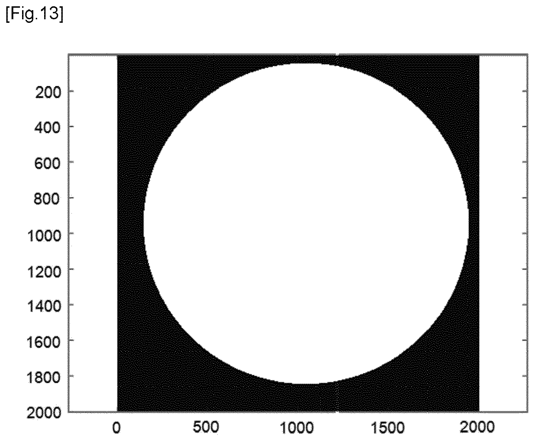

En connaissant la position de l'émetteur $q$, la distance $D_{q,r}$ et le coefficient d'affinité $\beta_{q,r}$ (ici égal à 1), on peut déterminer la carte Rp illustrée à la figure 13.

Cette première carte permet de délimiter la zone de recherche.

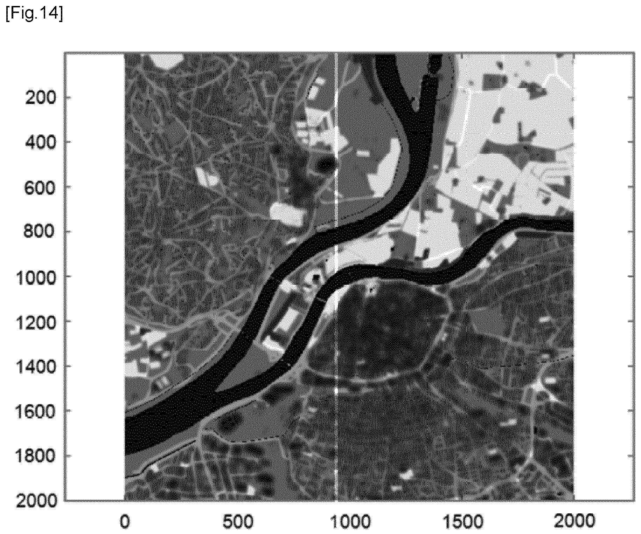

En connaissant les coefficients d'affinité de l'émetteur r et grâce à une base de données cartographique, il est possible de calculer la carte $Tp$ représentée à la figure 14. Dans cet exemple, on s'appuie sur une segmentation du terrain divisée en catégories suivantes: zone urbaine, plaine, forêt, routes, eau. Les coefficients d'affinité de r vis-à-vis de ces types de terrain sont prédéfinis.

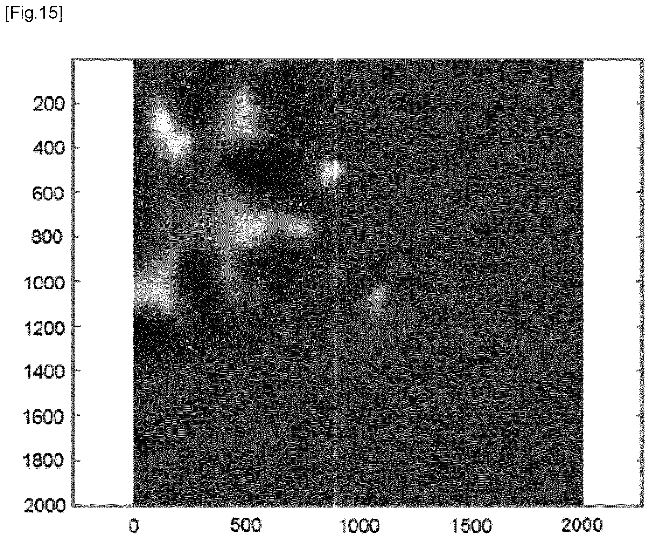

De plus, grâce à un modèle numérique de terrain, selon la procédure décrite à l'étape 202, on peut calculer la carte de densité de probabilité de présence liée au relief Cp représentée à la figure 15.

Enfin, l'étape de fusion 205 permet de combiner ces différents critères et de calculer la carte de densité de probabilité de présence finale :

$$Lp'_{i,j} = P(X = i, Y = j \mid C \cap T \cap R) = \frac{Cp_{i,j} \times Tp_{i,j} \times Rp_{i,j}}{\sum_a \sum_b Cp_{a,b} \times Tp_{a,b} \times Rp_{a,b}}$$

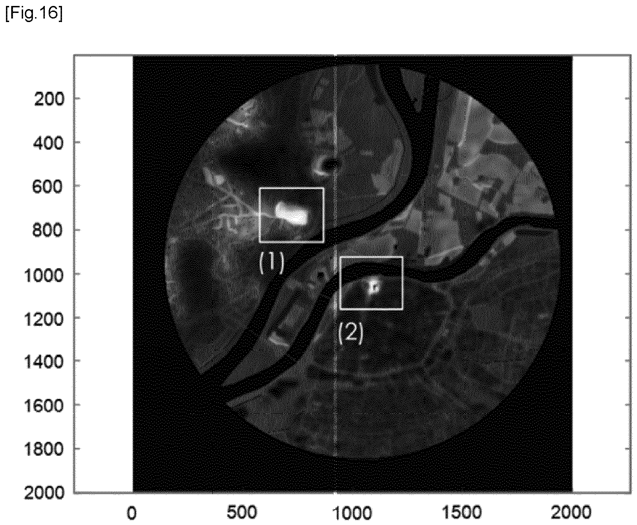

Cette carte finale est représentée à la figure 16.

Grâce à cette carte finale, on peut observer que deux zones Z1 et Z2 ressortent particulièrement comme étant des zones de présence probable de la source r.

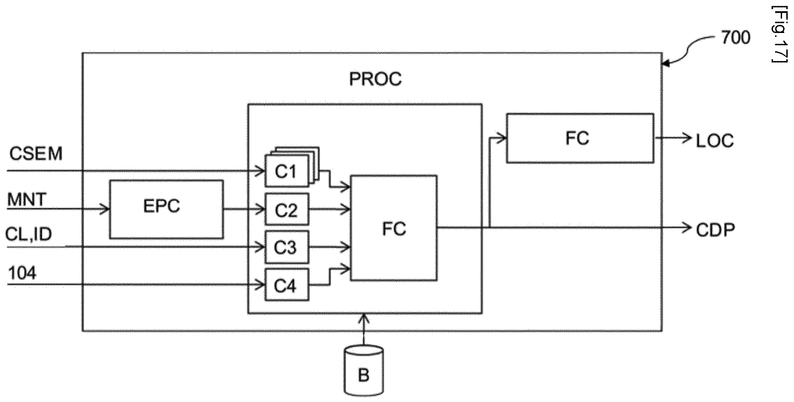

La figure 17 représente un schéma d'un système de localisation configuré pour mettre en œuvre la méthode selon l'invention.

Le système 700 comprend un ou plusieurs modules de calcul configurés pour exécuter les étapes de la méthode selon l'invention. Un exemple d'architecture d'un tel système est décrit à la figure 17. Il comprend un module PROC principal comprenant des sous-modules de calcul C1,C2,C3,C4 chacun étant apte à générer une carte de densité de probabilité de présence mono-critère, et un sous-module de calcul FC configuré pour appliquer une étape de fusion pour générer une carte finale CDP. Le système 700 reçoit en entrée une carte de segmentation sémantique du terrain CSEM, un modèle numérique de terrain MNT, des informations de localisation et identification CL,ID fournies par un ou plusieurs capteurs et des informations complémentaires 104. Le système comprend par ailleurs une base de connaissances B sur les caractéristiques des émetteurs à localiser, un module EPC d'extraction de points culminants appliqué au modèle numérique de terrain MNT et un module FC d'affinage de la localisation appliqué à la carte de probabilité de présence finale CDP.

L'organisation modulaire du système 700 représentée à la figure 17 est donnée à titre d'exemple non limitatif, d'autres architectures pouvant être envisagées dans la mesure où le système 700 est configuré pour exécuter les étapes de la méthode selon l'invention.

Chacun des éléments du système 700 selon l'invention peut être réalisé sous forme logicielle et/ou matérielle à partir d'un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

L'invention peut aussi être mise en œuvre en tant que programme d'ordinateur comportant des instructions pour son exécution. Le programme d'ordinateur peut être enregistré sur un support d'enregistrement lisible par un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing"),* éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités. Le code exécutable peut également être téléchargeable depuis un serveur distant.

Le programme d'ordinateur peut comprendre un code source, un code objet, un code source intermédiaire ou un code objet partiellement compilé ou toute autre forme d'instructions de code de programme adaptées pour mettre en œuvre l'invention sous la forme d'un programme d'ordinateur.

Un tel programme peut présenter diverses architectures fonctionnelles. Par exemple, un programme d'ordinateur selon l'invention peut être décomposé en une ou plusieurs routines qui peuvent être adaptées à exécuter une ou plusieurs fonctions de l'invention telles que décrites précédemment. Les routines peuvent être enregistrées ensemble dans un même fichier exécutable mais peuvent également être sauvegardées dans un ou plusieurs fichiers externes sous la forme de librairies qui sont associées à un programme principal de façon statique ou dynamique. Les routines peuvent être appelées depuis le programme principal mais peuvent également comprendre des appels à d'autres routines ou sous-routines.

Tous les procédés ou étapes de procédés, programmes ou sous-programmes décrits sous la forme d'organigrammes doivent être interprétés comme correspondant à des modules, segments ou portions de code de programme qui incluent une ou plusieurs instructions de code pour implémenter les fonctions logiques et les étapes de l'invention décrites.

La carte de probabilité de présence finale CDP peut être restituée à un utilisateur via une interface graphique, par exemple un écran d'affichage ou tout autre moyen équivalent.

Références

[Wil85] R. G. Wiley : Electronic intelligence: the interception of radar signals, Artech House, 1985.

**Revendications**

**1.** Méthode, mise en œuvre par ordinateur, de génération d'une carte de probabilité de présence d'un émetteur, la méthode comprenant les étapes de :

- Déterminer (101) au moins une première carte de probabilité de présence d'un émetteur d'un premier type égale à :

i. Une carte de localisation d'un émetteur obtenue par un capteur de localisation,

- Déterminer (104) au moins une deuxième carte de probabilité de présence d'un émetteur d'un second type égale à :

i. Une carte de localisation d'un émetteur sachant la localisation d'au moins un autre émetteur, obtenue à partir d'informations a priori de proximité entre émetteurs,

- Fusionner (105) l'au moins une première carte de probabilité de présence d'un émetteur du premier type avec l'au moins une deuxième carte de probabilité d'un émetteur du second type pour obtenir une carte fusionnée.

**2.** Méthode de génération d'une carte de probabilité de présence d'un émetteur selon la revendication 1 dans laquelle le capteur de localisation est un radar ou un capteur optronique.

**3.** Méthode de génération d'une carte de probabilité de présence d'un émetteur selon l'une des revendications précédentes dans laquelle le capteur de localisation fournit une zone de localisation de l'émetteur définie par un centre et une matrice de covariance et la carte de localisation est déterminée (101) par application d'une distribution binormale paramétrée par le centre de la zone de localisation et la matrice de covariance.

4.  Méthode de génération d'une carte de probabilité de présence d'un émetteur selon l'une des revendications précédentes dans laquelle la carte de localisation d'un émetteur sachant la localisation d'au moins un autre émetteur est déterminée (104) au moyen des étapes de :

    - Générer une zone de présence d'un émetteur autour de chaque autre émetteur précédemment localisé,
    - Affecter aux points de la zone une valeur dépendant d'un coefficient d'affinité entre l'émetteur à localiser et l'émetteur précédemment localisé.

5.  Méthode de génération d'une carte de probabilité de présence d'un émetteur selon l'une quelconque des revendications précédentes comprenant l'étape de :

    - Déterminer (102,103) au moins une troisième carte de probabilité de présence d'un émetteur d'un troisième type prise parmi :

        i. Une carte de localisation d'un émetteur en fonction du relief d'une zone,
        ii. Une carte de localisation d'un émetteur en fonction d'une cartographie sémantique d'une zone,

    - Fusionner (105) l'au moins une troisième carte de probabilité de présence d'un émetteur du troisième type avec la carte fusionnée.

6.  Méthode de génération d'une carte de probabilité de présence d'un émetteur selon la revendication 5 dans laquelle la carte de localisation d'un émetteur en fonction du relief d'une zone est déterminée (102) au moyen des étapes de :

    - Générer une cartographie d'une zone,
    - Appliquer à la cartographie un filtre de convolution pour amplifier les maxima locaux,
    - Normaliser la cartographie filtrée.

7.  Méthode de génération d'une carte de probabilité de présence d'un émetteur selon l'une quelconque des revendications 5 ou 6 dans laquelle la carte de localisation d'un émetteur en fonction d'une cartographie sémantique d'une zone est déterminée (103) au moyen des étapes de :

    - Générer une cartographie d'une zone,
    - Appliquer à la cartographie une segmentation sémantique pour générer plusieurs masques de la zone, associés chacun à un type de terrain,
    - Fusionner les masques et normaliser le résultat.

8.  Méthode de génération d'une carte de probabilité de présence d'un émetteur selon la revendication 7 dans laquelle chaque masque est pondéré par un coefficient d'affinité entre le type de terrain et le type d'émetteur.

9.  Méthode de génération d'une carte de probabilité de présence d'un émetteur selon l'une des revendications précédentes comprenant en outre la génération d'une zone de localisation définie par un centre et une covariance déterminés à partir de la carte de probabilité de présence obtenue après fusion.

10. Méthode de génération d'une carte de probabilité de présence d'un émetteur selon l'une des revendications 4, 6 ou 8 dans laquelle au moins un paramètre parmi : les paramètres du filtre de convolution, les coefficients d'affinité entre un type de terrain et un type d'émetteur, les dimensions des zones de présence, les coefficients d'affinité entre un émetteur à localiser et un émetteur précédemment localisé, est déterminé au moyen d'une méthode d'apprentissage automatisée.

11. Système (700) de génération d'une carte de probabilité de présence d'un émetteur comprenant des moyens configurés pour mettre en œuvre la méthode selon l'une des revendications précédentes.

**Patentansprüche**

1.  Verfahren, das von einem Computer umgesetzt wird, zum Erzeugen einer Wahrscheinlichkeitskarte für Vorhandensein eines Senders, wobei das Verfahren die Schritte umfasst zum:

- Bestimmen (101) mindestens einer ersten Wahrscheinlichkeitskarte für Vorhandensein eines Senders eines ersten Typs, gleich:

    i. Einer Lokalisierungskarte eines Senders, die durch einen Lokalisierungssensor erhalten wird,

- Bestimmen (104) mindestens einer zweiten Wahrscheinlichkeitskarte für Vorhandensein eines Senders eines zweiten Typs, gleich:

    i. Einer Lokalisierungskarte eines Senders, welche die Lokalisierung mindestens eines anderen Senders kennt, die aus vorgefassten Informationen über eine Nähe zwischen Sendern erhalten wird,

- Fusionieren (105) der mindestens einen Wahrscheinlichkeitskarte für Vorhandensein eines Senders des ersten Typs mit mindestens einer zweiten Wahrscheinlichkeitskarte eines Senders des zweiten Typs, um eine fusionierte Karte zu erhalten.

2.  Verfahren zum Erzeugen einer Wahrscheinlichkeitskarte für Vorhandensein eines Senders nach Anspruch 1, wobei der Lokalisierungssensor ein Radar oder ein optronischer Sensor ist.

3.  Verfahren zum Erzeugen einer Wahrscheinlichkeitskarte für Vorhandensein eines Sensors nach einem der vorstehenden Ansprüche, wobei der Lokalisierungssensor eine Lokalisierungszone des Sensors bereitstellt, die durch ein Zentrum und eine Kovarianz-Matrix definiert ist, und die Lokalisierungskarte durch Anwenden einer Binormalverteilung bestimmt (101) wird, die durch das Zentrum der Lokalisierungszone und die Kovarianz-Matrix parametriert ist.

4.  Verfahren zum Erzeugen einer Wahrscheinlichkeitskarte für Vorhandensein eines Sensors nach einem der vorstehenden Ansprüche, wobei die Lokalisierungskarte eines Sensors, welche die Lokalisierung mindestens eines anderen Sensors kennt, anhand der Schritte bestimmt (104) wird zum:

    - Erzeugen einer Zone für Vorhandensein eines Sensors um jeden zuvor lokalisierten anderen Sensor,
    - Zuordnen zu den Punkten der Zone eines Wertes, der von einem Affinitätskoeffizienten zwischen dem zu lokalisierenden Sensor und dem zuvor lokalisierten Sensor abhängig ist.

5.  Verfahren zum Erzeugen einer Wahrscheinlichkeitskarte für Vorhandensein eines Sensors nach einem der vorstehenden Ansprüche, umfassend den Schritt zum:

    - Bestimmen (102,103) mindestens einer dritten Wahrscheinlichkeitskarte für Vorhandensein eines Senders eines dritten Typs, übernommen aus:

        i. Einer Lokalisierungskarte eines Sensors in Abhängigkeit von einem Relief einer Zone,
        ii. Einer Lokalisierungskarte eines Sensors in Abhängigkeit von einer semantischen Kartografie einer Zone,

    - Fusionieren (105) der mindestens einen dritten Wahrscheinlichkeitskarte für Vorhandensein eines Senders des dritten Typs mit der fusionierten Karte.

6.  Verfahren zum Erzeugen einer Wahrscheinlichkeitskarte für Vorhandensein eines Sensors nach Anspruch 5, wobei die Lokalisierungskarte eines Sensors in Abhängigkeit vom Relief einer Zone anhand der Schritte bestimmt (102) wird zum:

    - Erzeugen einer Kartografie einer Zone,
    - Anwenden auf die Kartografie eines Konvolutionsfilters, um die lokalen Maxima zu verstärken,
    - Normalisieren der gefilterten Kartografie.

7.  Verfahren zum Erzeugen einer Wahrscheinlichkeitskarte für Vorhandensein eines Sensors nach einem der Ansprüche 5 oder 6, wobei die Lokalisierungskarte eines Sensors in Abhängigkeit von einer semantische Kartografie einer Zone anhand der Schritte bestimmt (103) wird zum:

- Erzeugen einer Kartografie einer Zone,
- Anwenden auf die Kartografie einer semantischen Segmentierung, um mehrere Masken der Zone zu erzeugen, die jeweils einem Bodentyp zugeordnet sind,
- Fusionieren der Masken und Normalisieren des Ergebnisses.

8. Verfahren zum Erzeugen einer Wahrscheinlichkeitskarte für Vorhandensein eines Sensors nach Anspruch 7, wobei jede Maske durch einen Affinitätskoeffizienten zwischen dem Bodentyp und dem Sendertyp gewichtet wird.

9. Verfahren zum Erzeugen einer Wahrscheinlichkeitskarte für Vorhandensein eines Sensors nach einem der vorstehenden Ansprüche, das weiter das Erzeugen einer Lokalisierungszone umfasst, die durch ein Zentrum und eine Kovarianz definiert wird, die aus der nach Fusion erhaltenen Wahrscheinlichkeitskarte für Vorhandensein bestimmt werden.

10. Verfahren zum Erzeugen einer Wahrscheinlichkeitskarte für Vorhandensein eines Sensors nach einem der Ansprüche 4, 6 oder 8, wobei mindestens ein Parameter aus: den Parametern des Konvolutionsfilters, den Affinitätskoeffizienten zwischen einem Bodentyp und einem Sendertyp, den Abmessungen der Zonen für Vorhandensein, den Affinitätskoeffizienten zwischen einem zu lokalisierenden Sender und einem zuvor lokalisierten Sender anhand eines automatisierten Lernverfahrens bestimmt wird.

11. System (700) zum Erzeugen einer Wahrscheinlichkeitskarte für Vorhandensein eines Sensors das Mittel umfasst, die konfiguriert sind, um das Verfahren nach einem der vorstehenden Ansprüche umzusetzen.

**Claims**

1. Method, implemented by a computer, for generating a probability map for the presence of a transmitter, the method comprising the steps of:

   - determining (101) at least a first probability map for the presence of a transmitter of a first type equal to:

       i. a location map for a transmitter obtained by means of a location sensor,

   - determining (104) at least a second probability map for the presence of a transmitter of a second type equal to:

       i. a location map for a transmitter knowing the location of at least one other transmitter, obtained from information items a priori of proximity between transmitters,

   - merging (105) the at least one first probability map for the presence of a transmitter of the first type with the at least one second probability map for a transmitter of the second type in order to obtain a merged map.

2. Method for generating a probability map for the presence of a transmitter according to claim 1, wherein the location sensor is a radar or an optronic sensor.

3. Method for generating a probability map for the presence of a transmitter according to either of the preceding claims, wherein the location sensor provides a location zone of the transmitter defined by a center and a covariance matrix and the location map is determined (101) by applying a parametrized binormal distribution via the center of the location zone and the covariance matrix.

4. Method for generating a probability map for the presence of a transmitter according to any one of the preceding claims, wherein the location map for a transmitter knowing the location of at least one other transmitter is determined (104) using the steps of:

   - generating a zone of the presence of a transmitter around each other transmitter which has been located beforehand,
   - assigning to the points of the zone a value which is dependent on an affinity coefficient between the transmitter to be located and the transmitter which has been located beforehand.

5. Method for generating a probability map for the presence of a transmitter according to any one of the preceding claims, comprising the step of:

- determining (102, 103) at least a third probability map for the presence of a transmitter of a third type, taken from:

i. a location map for a transmitter as a function of the relief of a zone,
ii. a location map for a transmitter as a function of a semantic mapping of a zone,

- merging (105) the at least one third probability map for the presence of a transmitter of the third type with the merged map.

6. Method for generating a probability map for the presence of a transmitter according to claim 5, wherein the location map for a transmitter as a function of the relief of a zone is determined (102) using the steps of:

- generating a mapping of a zone,
- applying to the mapping a convolution filter in order to amplify the local maxima,
- standardizing the filtered mapping.

7. Method for generating a probability map for the presence of a transmitter according to either claim 5 or claim 6, wherein the location map for a transmitter as a function of a semantic mapping of a zone is determined (103) using the steps of:

- generating a mapping of a zone,
- applying a semantic segmentation to the mapping in order to generate a plurality of masks of the zone, each one associated with a type of terrain,
- merging the masks and standardizing the result.

8. Method for generating a probability map for the presence of a transmitter according to claim 7, wherein each mask is weighted by an affinity coefficient between the type of terrain and the type of transmitter.

9. Method for generating a probability map for the presence of a transmitter according to any one of the preceding claims, further comprising the generation of a location zone defined by a center and a covariance determined from the presence probability map obtained after merging.

10. Method for generating a probability map for the presence of a transmitter according to any one of claims 4, 6 or 8, wherein at least one parameter from: the parameters of the convolution filter, the affinity coefficients between a type of terrain and a type of transmitter, the dimensions of the presence zones, the affinity coefficients between a transmitter to be located and a transmitter previously located is determined using an automated learning method.

11. System (700) for generating a probability map for the presence of a transmitter comprising means which are configured to implement the method according to any one of the preceding claims.

[Fig. 1]

[Fig. 2]

EP 4 150 362 B1

[Fig. 3]

[Fig. 4]

[Fig.5]

[Fig.6]

[Fig.7]

[Fig.8]

PA

Mesures de DOA

EL

[Fig.9]

[Fig.10]

[Fig.11]

[Fig.12]

[Fig.13]

[Fig.14]

[Fig.15]

[Fig.16]

[Fig.17]

EP 4 150 362 B1

28

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. G. WILEY**. Electronic intelligence: the interception of radar signals. *Artech House*, 1985